# FASCICULE DE BREVET EUROPEEN

(11) **EP 2 362 855 B1**
(45) Date de publication et mention de la délivrance du brevet: **20.09.2017**
(21) Numéro de dépôt: 09737465.6
(22) Date de dépôt: 26.10.2009
(51) Int. Cl.: C02F 1/28, G21F 9/12

(54) **PROCÉDÉ DE DÉCONTAMINATION D'UN EFFLUENT LIQUIDE COMPRENANT UN OU PLUSIEURS ÉLÉMENTS CHIMIQUES RADIOACTIFS PAR TRAITEMENT EN LIT FLUIDISE**
VERFAHREN ZUR DEKONTAMINIERUNG EINES ABWASSERS, DAS EIN ODER MEHRERE RADIOAKTIVE CHEMISCHE ELEMENTE ENTHÄLT, DURCH EINE WIRBELSCHICHTBEHANDLUNG
METHOD FOR DECONTAMINATING A LIQUID EFFLUENT CONTAINING ONE OR MORE RADIOACTIVE CHEMICAL ELEMENTS BY A FLUIDISED BED TREATMENT

(30) Priorité: 27.10.2008 FR 0857288
(43) Date de publication de la demande: 07.09.2011
(73) Titulaire: Commissariat à l'Energie Atomique, 75015 Paris (FR)
(72) Inventeur: PACARY, Vincent, F-30200 Bagnols Sur Ceze (FR); BARRE, Yves, F-84100 Uchaux (FR); PLASARI, Edouard, F-54000 Nancy (FR); COHIN, Olivier, 72600 Mamers (FR); MUHR, Hervé, F-54250 Champigneulles (FR); JAUBERT CERE, Claire, 50120 Equeurdreville (FR)
(74) Mandataire: Ilgart, Jean-Christophe
(86) Numéro de dépôt international: PCT/EP2009/064093
(87) Numéro de publication internationale: WO 2010/049396

(56) Documents cités:
- EP-A- 0 646 934
- DE-A1- 19 642 839
- DE-A1- 19 927 907
- US-A- 4 347 141
- US-B1- 6 419 832
- ENGLERT A H ET AL: "Adsorbing flocs in expanded/fluidised bed reactors: A new basis for pollutants removal", MINERALS ENGINEERING, PERGAMON PRESS , OXFORD, GB, vol. 19, no. 9, 1 July 2006 (2006-07-01), pages 918-924, XP024902743, ISSN: 0892-6875, DOI: 10.1016/J.MINENG.2005.10.007 [retrieved on 2006-07-01]

## Description

### DOMAINE TECHNIQUE

La présente invention a trait à un procédé de décontamination d'un effluent liquide comprenant un ou plusieurs éléments radioactifs à éliminer (tels que le strontium, le ruthénium, le césium, les émetteurs α, tels que l'américium, le plutonium et l'uranium), par traitement en lit fluidisé, par exemple, par coprécipitation.

Le traitement de décontamination d'effluents liquides, notamment d'effluents liquides radioactifs, par coprécipitation a été mis au point dans les années 60 (voir par exemple les demandes de brevet EP 0 646 934 A1, DE 199 27 907 A1 et US 6,419,832 B1). Celui-ci consiste à introduire dans l'effluent liquide à décontaminer des particules solides préformées et/ou des réactifs précurseurs desdites particules, lesdits réactifs réagissant *in situ* dans l'effluent liquide à décontaminer pour former lesdites particules. Ces particules sont choisies pour leur capacité à capter et retenir sélectivement le ou lesdits éléments chimiques à éliminer. Parmi les particules solides susceptibles de capter et retenir des éléments métalliques, on peut citer :
- les particules de sulfate de baryum aptes à capter et retenir le strontium ;
- les particules d'hydroxydes de fer et de cuivre aptes à capter et retenir le ruthénium et les émetteurs α, tels que l'américium, le plutonium et l'uranium ;
- les particules de ferrocyanures de nickel et de cobalt aptes à capter et retenir sélectivement le césium.

Le traitement de décontamination peut être réalisé selon deux mondes :
- un mode discontinu, dans lequel l'on traite uniquement un volume prédéterminé d'effluent liquide à décontaminer introduit dans un réacteur, dans lequel l'on introduit les particules solides aptes à capter et retenir le ou lesdits éléments chimiques à éliminer et/ou les réactifs précurseurs desdites particules ;
- un mode continu, dans lequel l'on introduit dans un réacteur de façon continue, avec un débit constant ou variable, l'effluent à décontaminer, les particules solides aptes à capter et retenir le ou lesdits éléments chimiques à éliminer et/ou les réactifs précurseurs desdites particules, l'ajout des particules et/ou réactifs pouvant être effectué dans une cascade de réacteurs.

Que ce soit pour le mode discontinu ou continu, l'on obtient à l'issue du traitement dans le réacteur, une suspension de particules solides ayant capté les éléments chimiques à éliminer initialement présents dans l'effluent liquide. L'issue finale du traitement consiste, ensuite, à réaliser une étape de séparation liquide/solide généralement dans un décanteur. Cette étape peut être facilitée en ajoutant à la suspension un agent coagulant et/ou un agent floculant. La phase solide recueillie à l'issue de cette étape de séparation (appelée à ce stade « boue ») est alors considérée comme un déchet ultime et est conditionnée, généralement dans du bitume ou dans une matrice cimentaire, avant d'être entreposée. Le liquide décontaminé est, quant à lui, rejeté dans l'environnement, si sa composition radiologique et chimique le permet. A défaut, le liquide peut être amené à subir, à nouveau, un traitement ultérieur de décontamination.

Pour mettre en oeuvre un tel procédé de décontamination, deux dispositifs sont classiquement nécessaires :
- un réacteur (pouvant comprendre une ou plusieurs cuves), dans lequel se déroule l'étape de mise en contact des particules solides aptes à précipiter avec les éléments chimiques à éliminer de l'effluent liquide ; et
- une cuve de décantation et/ou un module de filtration permettant la séparation solide-liquide, à savoir entre la phase comprenant le précipité ayant capté le (les) élément(s) chimique(s) à éliminer et la phase liquide comprenant l'effluent débarrassé ou, à tout le moins, appauvri en élément(s) chimique(s) à éliminer, la décantation nécessitant l'utilisation de composés organiques, tels que des agents floculants afin de faciliter le regroupement des particules dans la suspension.

Ce type de traitement nécessite donc une installation de taille importante et donc peu flexible. D'autre part, l'investissement nécessaire à la construction, au fonctionnement et à la maintenance de ce type d'installation est important.

Par ailleurs, notamment lorsque le traitement est réalisé en mode discontinu, pour que les différentes étapes du traitement puissent être effectuées (remplissage de la cuve, ajout des réactifs, brassage, vidange..), le temps nécessaire pour les effectuer est important (de l'ordre, par exemple, de plusieurs heures), ce qui limite la capacité de traitement de l'installation.

Lorsque le traitement est réalisé en mode continu, pour avoir un traitement efficace, il faut que l'effluent puisse bénéficier d'un temps de séjour important dans le réacteur. En effet, plus le temps de contact entre les particules solides et le(les) élément(s) chimique(s) contenu(s) dans l'effluent est important, plus le transfert des éléments de la phase liquide vers la phase solide est important (le temps de séjour devant être d'au moins 5 minutes dans le réacteur et d'au moins 30 minutes dans le décanteur pour obtenir une bonne séparation). Donc pour un débit d'effluent donné, ce sont les volumes du réacteur et du décanteur, qui doivent être ajustés de façon à satisfaire à ces temps de séjour, sachant que plus l'efficacité de décontamination visée est importante, plus la taille du réacteur doit être importante.

En outre, un second traitement est parfois nécessaire avec les installations de l'art antérieur, notamment pour les effluents complexes (contenant plusieurs éléments chimiques à éliminer) ou ceux de haute activité radiologique. Cela a pour conséquence d'augmenter, de façon substantielle, avec de tels effluents, la quantité de boue produite. Pour éviter cela, il serait intéressant de pouvoir augmenter l'efficacité de traitement sans augmenter le volume de boue produit.

Un des facteurs conditionnant l'efficacité du traitement en termes de décontamination est la quantité de particules solides présentes au contact de l'effluent à décontaminer. Pour assurer une efficacité minimale au traitement, des quantités importantes de réactifs doivent être utilisées. L'activité radiologique d'une suspension pouvant résulter de la présence d'une quantité infime de radioéléments (par exemple, quelques nanogrammes par litre), la boue issue du traitement peut alors être faiblement radioactive. Il serait ainsi particulièrement avantageux de pouvoir concentrer l'activité radiologique dans un volume de boue plus faible, afin de limiter les volumes d'entreposage.

Ainsi, il existe un véritable besoin concernant un procédé de décontamination d'un effluent liquide en un ou plusieurs éléments radioactifs contenus dans celui-ci, qui permette de surmonter les inconvénients suivants :
- le problème d'encombrement de l'installation au sol, du fait des deux opérations nécessaires pour la décontamination (traitement+séparation solide-liquide) ;
- les risques de contamination lors du transfert de l'effluent traité et des boues formées dans l'unité de séparation solide-liquide, ce transfert s'effectuant par le biais de conduits reliant l'unité de traitement à l'unité de décantation ;

- l'emploi d'une grande quantité de solide par volume d'effluent traité pour une décontamination parfois faible et qui conduit à un grand volume de déchets, qu'il faut ensuite conditionner ;
- la nécessité de devoir utiliser des composés organiques, tels que des agents floculants, pour réaliser la séparation solide/liquide.

### EXPOSÉ DE L'INVENTION

Ainsi, l'invention a trait à un procédé continu de décontamination d'un effluent liquide comprenant un ou plusieurs éléments chimiques radioactifs à éliminer comprenant les étapes suivantes :
- une étape de mise en contact en lit fluidisé agité, dans une première zone d'un réacteur, dudit effluent liquide avec des particules solides aptes, par coprécipitation et/ou adsorption et/ou échange d'ions, à capter et retenir le ou lesdits éléments chimiques radioactifs, moyennant quoi l'on obtient une suspension de particules solides contenant le ou lesdits éléments chimiques radioactifs, cette étape de mise en contact en lit fluidisé consistant à mettre en suspension des particules solides constituées par lesdites particules solides aptes, par coprécipitation et/ ou adsorption et/ou échange d'ions, à capter et retenir le ou lesdits éléments chimiques radioactifs, dans un écoulement fluide ascendant constitué par ledit effluent liquide;
- une étape de décantation de ladite suspension, dans une seconde zone du même réacteur, cette seconde zone étant distincte de la première zone susmentionnée, moyennant quoi l'on obtient une phase solide comprenant les particules solides contenant ledit ou lesdits éléments chimiques radioactifs à éliminer et une phase liquide appauvrie ou dénuée en ledit ou lesdits éléments chimiques radioactifs à éliminer ; et
- une étape de séparation de ladite phase solide et de ladite phase liquide; ledit réacteur étant un réacteur vertical, dans lequel la première colonne où l'effluent liquide ainsi que les particules ou les réactifs nécessaires à la formation desdites particules sont injectées et la seconde zone est une seconde colonne surmontant ladite première colonne.

De ce procédé nouvellement mis en oeuvre découlent les avantages généraux suivants :
- un procédé efficace en termes d'investissement, de maintenance et de fonctionnement, du fait de l'utilisation d'un seul réacteur permettant la mise en oeuvre des opérations de mise en contact, de décantation et de séparation ;
- un procédé de mise en oeuvre simple, permettant le traitement d'effluents à la source, grâce à la facilité de transport du réacteur de mise en oeuvre ;
- par rapport à un réacteur ne comportant pas de deuxième compartiment pour faciliter la décantation, il est possible de travailler à un débit d'effluent plus important, et donc de traiter pour un volume total égal de réacteur, un volume d'effluent plus important pour une durée déterminée.

Qui plus est, grâce à l'utilisation concomitante du régime de lit fluidisé, de l'agitation dudit lit et d'une zone destinée à la décantation, le procédé de l'invention permet notamment, en l'absence de purge, d'obtenir un contact prolongé desdites particules solides avec l'effluent à décontaminer, et donc une efficacité de décontamination élevée. Plus précisément, le fait de réaliser la mise en contact et la décantation dans un seul et même réacteur permet d'avoir un même temps de séjour pour, à la fois, cette mise en contact et cette décantation, contrairement à la mise en oeuvre classique où ces deux étapes sont réalisées dans deux cuves différentes. Le temps de séjour pouvant être de l'ordre de 30 minutes dans la première zone, où est mis en place le régime de lit fluidisé, la décantation, dans cette durée, peut avoir lieu et la décontamination est améliorée par allongement du temps de contact entre l'effluent et les particules solides par rapport à une mise en oeuvre classique. Le procédé de l'invention est un procédé continu, ce qui signifie, en d'autres termes, que les étapes de ce procédé sont mises en oeuvre de façon concomitante, c'est-à-dire, qu'à un instant t, un volume d'effluent liquide subit l'étape de mise en contact, tandis qu'un autre volume d'effluent liquide subit l'étape de décantation. Qui plus est, en fonctionnement continu, la première zone du réacteur est alimentée en continu en effluent liquide à traiter et en particules (ou réactifs aptes à former lesdites particules) susmentionnées. Ce mode de fonctionnement permet ainsi de traiter des volumes variables d'effluent, sans que l'on soit limité par le volume du réacteur dans le cas où le procédé est mis en oeuvre de façon discontinue. Ceci est particulièrement avantageux, dans la mesure où les apports d'effluents dans les stations de traitement peuvent varier dans le temps. Travailler ainsi selon un mode de fonctionnement continu permet d'apporter de la souplesse à la gestion des opérations de décontamination.

Qui plus est, du fait de l'apport continu de particules solides et d'effluent selon le mode de fonctionnement continu, la taille des particules solides augmente de façon continue, celles-ci pouvant, notamment, lorsque l'agitation dans la première zone est faible, se regrouper sous forme d'amas compacts, ce qui conduit à une augmentation de la taille moyenne des particules dans le dispositif. Ceci permet de pouvoir se passer, ou à tout le moins de diminuer, l'apport de composés organiques remplissant le rôle d'agent floculant.

De cela découle notamment une facilité de récupération desdites particules par décantation dans la seconde zone ou par filtration une fois l'arrêt de mise en oeuvre du procédé.

Conformément à l'invention, le procédé comprend une étape de mise en contact en lit fluidisé agité, dans une première zone d'un réacteur, dudit effluent liquide avec des particules solides aptes, par coprécipitation et/ou adsorption et/ou échange d'ions, à capter et retenir le ou lesdits éléments chimiques radioactifs, moyennant quoi l'on obtient une suspension de particules solides contenant le ou lesdits éléments chimiques radioactifs.

Lesdites particules peuvent être formées *in situ* par réaction entre des réactifs appropriés dans ladite première zone ou être injectées préformées dans ladite première zone.

Ledit réacteur mis en jeu dans ce procédé est un réacteur vertical, dans lequel la première zone correspond à un lit, qui est une première colonne où l'effluent liquide ainsi que les particules (ou les réactifs nécessaires à la formation desdites particules) sont injectées, l'injection pouvant se faire selon plusieurs points du lit et pouvant être réalisée en continu et la seconde zone est une seconde colonne surmontant ladite première colonne et présentant classiquement un diamètre supérieur à celui de la première colonne. L'injection peut être régulée, de sorte à concentrer l'activité radiologique dans un volume de boue prédéterminé.

Même si un avantage du procédé de l'invention est d'éviter l'utilisation d'un agent floculant, il peut être introduit, lors de cette étape de mise en contact, au moins un agent floculant dans ladite première zone, à savoir un agent qui va permettre d'entraîner les matières solides (en l'occurrence ici, les particules solides susmentionnées), de sorte à ce qu'elles coagulent. On peut citer, comme exemples d'agents floculants, des polymères cationiques, anioniques ou non chargés, mais de préférence anioniques. Citons, par exemple, le BetzDearborn AP1110P, qui est un polymère anionique d'acrylamide de poids moléculaire élevé.

Comme mentionné ci-dessus, l'étape de mise en contact s'effectue en lit fluidisé.

On précise que, par lit fluidisé, on entend le fait de mettre en suspension des particules solides dans un écoulement fluide ascendant, lesdites particules solides constituant le lit fluidisé, celles-ci étant, avantageusement, constituées par les particules aptes à capter et retenir ledit élément radioactif à éliminer, tandis que l'écoulement fluide ascendant est constitué par l'effluent liquide à décontaminer.

De l'utilisation d'un régime de lit fluidisé découle notamment une augmentation de la surface de contact entre lesdites particules et l'effluent liquide à traiter, ce qui permet d'assurer ainsi un bon transfert de matière entre lesdites particules et ledit effluent liquide et ainsi une bonne efficacité de décontamination. Le procédé étant réalisé en continu, il est avantageux de faire en sorte que les particules solides susmentionnées présentent un temps de séjour dans la première zone supérieur à celui d'une fraction d'effluent liquide donnée (par exemple, de l'ordre de une heure à plusieurs jours pour les particules solides pour une heure pour l'effluent liquide). Cela signifie qu'une grande quantité d'effluent va pouvoir passer sur une quantité de particules solides donnée. Il en résulte ainsi, par rapport à des systèmes n'utilisant pas le régime de lit fluidisé, une diminution de la quantité de particules solides utilisée par mètre cube d'effluent traité.

Dans la mesure où la quantité totale de boue produite par le procédé de l'invention provient essentiellement des réactions chimiques entre les particules solides susmentionnées et les éléments chimiques radioactifs à éliminer, il s'ensuit ainsi une réduction du volume total de boue. L'activité radiologique de la boue peut s'en trouver ainsi augmentée.

Avantageusement, cette première zone comprend un mobile d'agitation, destiné à assurer l'homogénéisation du lit, ce mobile d'agitation pouvant se présenter sous la forme d'un arbre, sur lequel des pales peuvent être disposées à différentes hauteurs. Comme le procédé fonctionne en continu et ainsi se traduit par une alimentation continue de la première zone par l'effluent à traiter et les particules solides susmentionnées (ou les réactifs aptes à réagir pour former lesdites particules), il peut se produire une augmentation de la quantité de particules solides dans le réacteur, qui pourrait être néfaste au bon fonctionnement du procédé. Ainsi, il peut être important de prévoir une régulation dans le temps de la quantité de particules solides dans ladite première zone. Pour ce faire, il peut être prévu, de façon continue ou discontinue, une étape de purge de ladite première zone, de sorte à éliminer le surplus de particules solides néfastes au bon fonctionnement du procédé.

Les particules solides aptes à capter et retenir le ou les éléments chimiques à extraire de l'effluent liquide seront choisies de façon à capter et retenir le ou les éléments chimiques en question. Les éléments chimiques radioactifs peuvent être choisis parmi le strontium, le ruthénium, le césium, des émetteurs α, tels que l'américium, le plutonium et l'uranium, et les mélanges de ceux-ci. Dans ce cas, le procédé de décontamination de l'invention sera un procédé de décontamination d'effluents liquides radioactifs, provenant, par exemple, d'installations nucléaires.

A titre d'exemples, lorsque l'élément chimique est le strontium, les particules solides peuvent être des particules de sulfate de baryum, de carbonate de baryum, de carbonate de calcium, d'hydroxyde de fer, de phosphate de calcium, de phosphate de fer, de dioxyde de manganèse, de dioxyde de titane, de préférence de sulfate de baryum.

Lorsque l'élément chimique est le ruthénium ou un émetteur α, tel que l'américium, le plutonium et l'uranium, les particules solides peuvent être des particules d'hydroxyde de fer et de cuivre.

Lorsque l'élément chimique est le césium, les particules solides peuvent être des particules de ferrocyanures de nickel et de cobalt, de tétraphénylborate et/ou plus généralement des particules présentant une structure zéolithique. De préférence, les particules solides aptes à capter et retenir le césium sont des particules de ferrocyanures de nickel et de cobalt.

Une fois l'étape de mise en contact réalisée, le procédé de l'invention comprend une étape de décantation de ladite suspension, dans une seconde zone du même réacteur, cette seconde zone étant distincte de la première zone susmentionnée, moyennant quoi l'on obtient une phase solide comprenant les particules solides contenant ledit ou lesdits éléments chimiques radioactifs à éliminer et une phase liquide appauvrie ou dénuée en ledit ou lesdits éléments chimiques radioactifs à éliminer, la concentration en particules solides pouvant être très élevée (de l'ordre de 100 kg/m³ ou plus). Ainsi, à l'issue de cette étape, l'on obtient une phase solide comprenant lesdites particules dans la partie inférieure du décanteur et une phase liquide surnageante appauvrie voire dénuée en le ou lesdits éléments chimiques radioactifs à éliminer et par voie de conséquence du ou desdites particules solides. Le réacteur étant un réacteur vertical, la seconde zone destinée à la décantation est située au-dessus de la première zone sous forme de colonne, cette seconde zone présentant, généralement, par rapport à ladite première zone sous-jacente, un diamètre plus important que celui de la colonne sous-jacente.

Enfin, le procédé de l'invention comprend une étape de séparation de ladite phase solide et de ladite phase liquide, ladite phase liquide étant classiquement séparée de la phase solide par débordement (par exemple, par le biais d'une ou plusieurs tubulures disposées dans la partie supérieure de la seconde zone), tandis que la phase solide est évacuée par soutirage, généralement, de façon discontinue. Cette phase solide est traitée, de sorte à la conditionner, par exemple, sous forme de bitume ou de ciment. Du fait de la forte concentration de particules solides dans la deuxième zone du réacteur, il peut être possible de faire passer la phase solide de la deuxième zone du réacteur vers une étape de conditionnement, sans passer par une étape de déshydratation par filtration. En effet, pour être conditionnée, la phase solide doit avoir une densité minimale pour permettre d'envisager un passage direct de celle-ci vers l'étape de conditionnement, sans autre traitement intermédiaire.

Préalablement à la mise en oeuvre des étapes susmentionnées (étapes de mise en contact, décantation et séparation), le procédé de l'invention peut comprendre avantageusement, une étape de remplissage de ladite première zone d'une quantité prédéterminée de particules solides aptes à capter et retenir le ou lesdits éléments chimiques à éliminer et/ou de réactifs tels que définis précédemment.

L'invention va maintenant être décrite par rapport aux exemples suivants donnés à titre illustratif et non limitatif.

### BRÈVE DESCRIPTION DES DESSINS

La figure 1 représente, sous forme d'un schéma de principe, un exemple d'une installation destinée à permettre la mise en oeuvre d'un procédé classique de décontamination d'un effluent aqueux.
La figure 2 représente, sous forme d'un schéma de principe, un exemple d'une installation destinée à permettre la mise en oeuvre d'un autre procédé classique de décontamination d'un effluent aqueux.
La figure 3 représente, sous forme d'un schéma de principe, un exemple d'une installation destinée à permettre la mise en oeuvre du procédé de l'invention.

Des références identiques ont été utilisées pour désigner des éléments identiques ou similaires.

### EXPOSÉ DÉTAILLÉ DE MODES DE RÉALISATION PARTICULIERS

### EXEMPLE 1

Cet exemple comparatif illustre la mise en oeuvre d'un procédé classique en mode continu pour la décontamination d'un effluent liquide contenant du strontium.

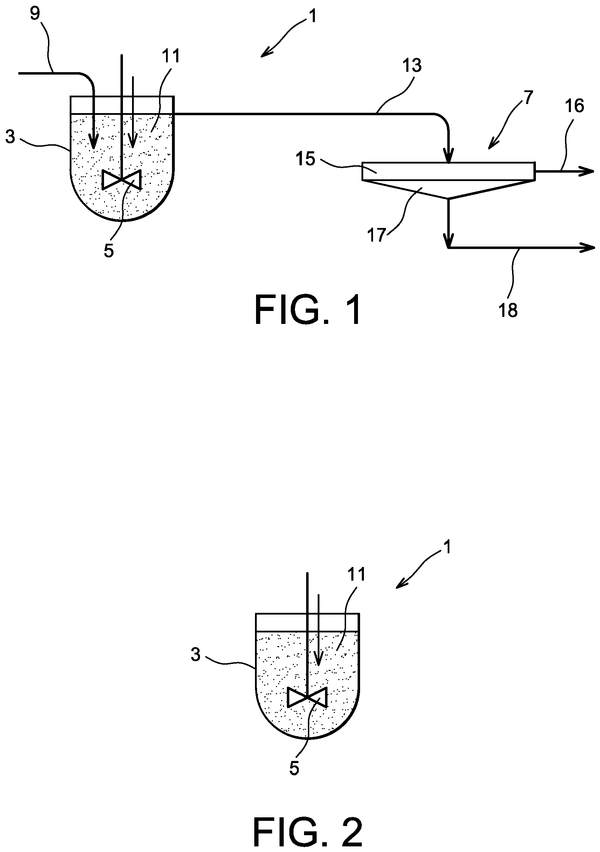

Pour la description de cet exemple, on se réfère à la figure 1 qui représente, sous la forme d'un schéma de principe, un exemple d'une installation 1 conçue pour la mise en oeuvre du procédé classique en mode continu dans le cadre d'un procédé industriel de décontamination d'un effluent aqueux, par exemple issu du retraitement d'un combustible nucléaire irradié, comprenant du strontium.

L'installation 1 comprend respectivement :
- un premier réacteur 3, destiné à accueillir l'effluent aqueux à décontaminer et les particules solides (ou les réactifs susceptibles de réagir pour former les particules appropriées) aptes à capter et retenir le strontium contenu dans l'effluent liquide, ce premier réacteur se présentant sous forme d'un réacteur en verre d'un volume utile de 2,5 litres ; le premier réacteur 3 étant muni d'un dispositif d'agitation 5 et de chicanes métalliques et d'une surverse (non représentée), destinée à évacuer le trop-plein le cas échéant ;
- un deuxième réacteur 7 assurant la fonction de décanteur destiné à accueillir la suspension formée dans le premier réacteur, cette suspension comprenant les particules solides ayant complexé le strontium, ce deuxième réacteur étant un réacteur du type cylindro-conique présentant un volume utile de 13 litres, l'alimentation en suspension étant réalisée en son centre ;

- une première conduite 9 connectée au premier réacteur 3 qui assure l'alimentation de ce dernier en effluent aqueux comprenant l'élément strontium à éliminer, l'acheminement étant facilité via une pompe péristaltique (non représentée) ;
- une deuxième conduite 11 connectée au premier réacteur 3 qui assure l'alimentation de ce dernier en réactifs aptes à réagir pour former des particules solides aptes à capter et retenir le strontium et/ou en particules solides déjà formées (ces particules étant en l'occurrence ici des particules solides de sulfate de baryum), l'acheminement étant facilité via une pompe péristaltique (non représentée) ;
- une troisième conduite 13 qui relie le premier réacteur 3 au deuxième réacteur 7 et qui assure l'acheminement, sous forme d'un flux de surverse, de la suspension comprenant les particules solides ayant capté et retenu le strontium du premier réacteur vers le second réacteur ;
- une quatrième conduite 16 qui permet le soutirage de la phase liquide 15 décontaminée ;
- une cinquième conduite 18 qui permet le soutirage de la phase solide 17.

Dans le dispositif présenté ci-dessus, l'effluent introduit dans le réacteur 3 par la conduite 9 est composé de 42,5 g/L de nitrate de sodium, de 14,2 g/L de sulfate de sodium et de 23 mg/L de nitrate de strontium. L'élément à éliminer est le strontium. Le débit d'effluent dans la conduite 9 est ajusté à 14 L/h. Le réactif introduit par la conduite 11 est une solution de nitrate de baryum à 76 g/L et le débit dans la conduite 11 est de 1 L/h.

Les ions sulfates introduits via la conduite 9 vont réagir avec les ions baryums introduits via la conduite 11 pour former des particules solides de sulfate de baryum qui vont capter et retenir le strontium.

Après 40 minutes de fonctionnement, la taille moyenne des particules de BaSO₄ produites est comprise entre 1*10⁻⁶ et 2*10⁻⁶ m. De plus, la concentration résiduelle en strontium mesurée en sortie du réacteur 3 par la conduite 13 est égale à 200±4*10⁻⁶ g/L. La quantité de particules solides dans le réacteur 3 est mesurée en filtrant sur un filtre ayant un seuil de coupure de 0,22*10⁻⁶ m, un volume déterminé d'une suspension extraite du réacteur 3. Le solide recueilli sur le filtre est placé à l'étuve à 110°C pendant 24 heures puis pesé. A l'issue de cette procédure, la quantité de particules solides présente dans le réacteur 3 est égale à 4,5 kg/m³.

### EXEMPLE 2

Dans le dispositif décrit dans l'exemple 1, un effluent contenant du nitrate de strontium Sr(NO₃)₂ à une concentration de 24*10⁻³ g/L, du nitrate de néodyme Nd(NO₃)₃.6H₂O à une concentration de 61*10⁻³ g/L et du nitrate de césium à une concentration de 30*10⁻³ g/L est introduit dans le réacteur 3. Cet effluent contient également 42,5 g/L de nitrate de sodium NaNO₃ et 5,35 g/L de sulfate de sodium Na₂SO₄. Les éléments à éliminer sont le strontium, le césium et le néodyme.

L'effluent est injecté à un débit constant de 15 L/h par la conduite 9. Dans le cadre de cet exemple, la conduite 11 correspond, en réalité dans cet exemple, à 4 conduites acheminant les 4 solutions ou suspensions suivantes:
* une solution comprenant 92,5 g/L de nitrate de baryum Ba(NO₃)₂ à un débit constant de 0,84 L/h;
* une solution comprenant 178,6 g/L de sulfate de fer FeSO₄.7H₂O et 35,7 g/L de sulfate de cuivre CuSO₄.5H₂O à un débit constant de 0,57 L/h;
* une solution comprenant 720 g/L d'hydroxyde de sodium NaOH à un débit constant de 0,06 L/h;
* une suspension formée par mélange de 43 g/L de ferrocyanure de potassium Fe(CN)₆K₄.3H₂O et de 28,6 g/L de sulfate de nickel NiSO₄.6H₂O introduite à un débit constant de 0,57 L/h.

Après 1 heure 30 de fonctionnement, les concentrations résiduelles en strontium, césium et néodyme dans la conduite 16 après filtration à 0,22 µm sont les suivantes:
- strontium: 280*10⁻⁶ g/L;
- césium: inférieure à 40*10⁻⁶ g/L;
- néodyme: inférieure à 130*10⁻⁶ g/L.

### EXEMPLE 3

Cet exemple illustre la mise en oeuvre du procédé classique en mode discontinu pour la décontamination d'un effluent liquide contenant du strontium.

Pour la description de cet exemple, on se réfère à la figure 2 qui représente, sous la forme d'un schéma de principe, un exemple d'une installation 1 conçue pour la mise en oeuvre du procédé classique en mode discontinu dans le cadre d'un procédé industriel de décontamination d'un effluent aqueux, par exemple issu du retraitement d'un combustible nucléaire irradié, comprenant du strontium.

L'installation présentée en figure 2 comprend respectivement :
- un réacteur 3, destiné à accueillir l'effluent aqueux à décontaminer et les particules solides (ou les réactifs susceptibles de réagir pour former les particules appropriées) aptes à capter et retenir le strontium contenu dans l'effluent liquide, ce premier réacteur se présentant sous forme d'un réacteur en verre d'un volume utile de 2, 5 litres ; le réacteur 3 étant muni d'un dispositif d'agitation 5 et de chicanes métalliques (non représentées) ;
- une conduite 11 connectée au réacteur 3 qui assure l'alimentation de ce dernier en réactifs aptes à réagir pour former des particules solides aptes à capter et retenir le strontium et/ou en particules solides déjà formées (ces particules étant en l'occurrence ici des particules solides de sulfate de baryum), l'acheminement étant facilité via une pompe péristaltique (non représentée).

Dans le dispositif présenté ci-dessus, le réacteur contient initialement 2,3 L d'une solution composée de 42,5 g/L de nitrate de sodium, de 14,2 g/L de sulfate de sodium et de 23 mg/L de nitrate de strontium. L'élément à éliminer dans cette solution est le strontium. Le réactif introduit par la conduite 11 est une solution de nitrate de baryum à 76 g/L et le débit dans la conduite 11 est de 1L/h. L'introduction par la conduite 11 est réalisée pendant 10 minutes puis est stoppée. Aucune introduction ni soutirage n'est réalisée par la suite, le réacteur est maintenu sous agitation.

Après 2 heures sous agitation, la taille moyenne des particules de BaSO₄ produites est comprise en 1*10⁻⁶ et 2*10⁻⁶ m. De plus, la concentration résiduelle en strontium mesurée dans la phase liquide obtenue après filtration à 0,22µm est égale à 125±25*10⁻⁶ g/L. La densité de BaSO₄ dans le réacteur est égale à 4,5 kg/m³.

### EXEMPLE 4

Cet exemple illustre la mise en oeuvre du procédé de l'invention pour la décontamination d'un effluent liquide comprenant du strontium.

Dans le cadre des exemples 4 à 6, l'installation 20 comprend un réacteur comprenant respectivement :
- une première zone 22, destinée à accueillir l'effluent aqueux à décontaminer et les particules solides (ou les réactifs susceptibles de réagir pour former les particules appropriées) aptes à capter et retenir l'élément radioactif à éliminer, cette première zone se présentant sous forme d'une colonne en verre de 10 cm de diamètre et de 50 cm de hauteur d'un volume utile de 4 litres; cette première zone étant munie d'un dispositif d'agitation 24 comprenant 4 étages de pâles mesurant chacune 3 cm de largeur et 1,5 cm de hauteur relié à un moteur (non représenté) faisant ainsi tourner le dispositif à une vitesse de l'ordre de 30 tours/min ;
- une deuxième zone 26, assurant la fonction de décanteur destiné à accueillir la suspension formée dans ladite première zone, cette suspension comprenant les particules solides ayant complexé l'élément radioactif à éliminer, cette deuxième zone se présentant sous forme d'une colonne en plexiglas de 20 cm de diamètre et de 30 cm de hauteur présentant un volume utile de 8,5 litres;

- une première conduite 28 connectée à la première zone 5 qui assure l'alimentation de ce dernier en effluent aqueux comprenant l'élément radioactif à éliminer, l'acheminement étant facilité par le biais d'une pompe péristaltique (non représentée) ;
- une deuxième conduite 30 connectée à la première zone 5 qui assure l'alimentation de ce dernier en réactifs aptes à réagir pour former des particules aptes à capter et retenir l'élément radioactif à éliminer et/ou en particules solides déjà formées et éventuellement en agent floculant, ces réactifs et/ou particules provenant d'un réservoir comprenant lesdits réactifs et/ou lesdites particules (ce réservoir n'étant pas représenté), l'acheminement étant facilité par le biais d'une pompe péristaltique (non représentée) ;
- une troisième conduite 32 qui permet le soutirage, par débordement, de la phase liquide 34 décontaminée ;
- une quatrième conduite 36 qui permet le soutirage de la phase solide 38;
- une cinquième conduite 40 qui permet de purger la première zone le cas échéant.

L'effluent liquide à décontaminer contient du nitrate de strontium Sr(NO₃)₂ à une concentration de 23 mg/L. Cet effluent contient également 42,5 g/L de nitrate de sodium NaNO₃ et 14,2 g/L de sulfate de sodium NaSO₄. L'élément à éliminer est le strontium.

Dans le cadre de l'exemple, l'effluent est injecté à un débit constant de 10,1 L/h par la conduite 28. Par la conduite 30, une solution contenant 76 g/L de nitrate de baryum Ba(NO₃)₂ est injectée à un débit constant de 0,37 L/h à environ 0,05 m de la base du dispositif. Le mélange de l'effluent et de la solution de nitrate de baryum conduit à la formation de sulfate de baryum BaSO₄. Le dispositif est initialement rempli d'une suspension de sulfate de baryum à raison d'une concentration d'environ 130 kg/m³. Après 48 heures de fonctionnement, un échantillon est prélevé par la conduite 32 et filtré à 0,22 µm pour mesurer par ICP-MS la concentration résiduelle en strontium. La concentration résiduelle en strontium mesurée est inférieure à la limite de détection de l'appareil de mesure soit inférieure à 20 ±4*10⁻⁶ g/L. Cette concentration résiduelle est plus faible que celle obtenue dans une mise en oeuvre classique en mode continu avec le même effluent et le même débit de solution de baryum, qui est seulement de 200±4*10⁻⁶ g/L (conformément à l'exemple 1). Une mise en oeuvre classique en mode discontinu mettant en jeu la même quantité de BaSO₄, la concentration en strontium est de 125±25*10⁻⁶ g/L (conformément à l'exemple 3). En conclusion, il y a au minimum un facteur 6 entre l'efficacité du traitement en lit fluidisé et celles des mises en oeuvre classiques.

De plus, la quantité de BaSO₄ produit par unité de volume d'effluent traité dans le lit fluidisé dans le cadre de cet exemple est deux fois inférieure à celle produite lors des traitements réalisés à échelle industrielle sur les installations de traitement des effluents du centre du CEA de Marcoule. Cet exemple montre donc l'excellente efficacité du procédé pour traiter les effluents contenant du strontium et montre également les potentialités de réduction du volume de déchet généré par le procédé.

### EXEMPLE 5

Afin de montrer l'augmentation de taille des particules produites par le dispositif décrit dans l'exemple 4, une série d'expériences a été réalisée pour différents débits de solution de nitrate de baryum dans la conduite 30 en conservant le débit et les caractéristiques de l'effluent de l'exemple 1. Ainsi, 4 expériences ont été réalisées pour des débits dans la conduite 30 de 0,7 L/h, 0,42 L/h, 0,14 L/h et 0,097 L/h. La taille de particules correspondantes a été mesurée après au moins 48 heures de fonctionnement dans chaque cas à l'aide d'un granulomètre laser (Malvern Mastersizer 2000). Des tailles comprises entre 13*10⁻⁶ m et 23*10⁻⁶ m ont été obtenus. Pour comparaison, une taille maximale de 2*10⁻⁶ m est obtenue avec les dispositifs classiques fonctionnant en mode continu et discontinu (conformément aux exemples 1 et 3). Il résulte de ces résultats, que la filtrabilité des particules produites en lit fluidisé est facilitée par rapport aux particules produites dans les traitements classiques.

Par ailleurs, la quantité de particules solides dans le compartiment 22 est mesurée en filtrant sur un filtre ayant un seuil de coupure de 0,22*10⁻⁶ m, un volume déterminé d'une suspension extraite du compartiment 22. Le solide recueilli sur le filtre est placé à l'étuve à 110°C pendant 24 heures puis pesé. A l'issue de cette procédure, la quantité de particules solides présente dans le compartiment 22 pour chacune des expériences est comprise entre 130 et 160 kg/m³. Cela est bien supérieur aux mises en oeuvre classiques, où la quantité de particules solides n'excède pas 15 kg/m³ (conformément aux exemples 1 et 3).

### EXEMPLE 6

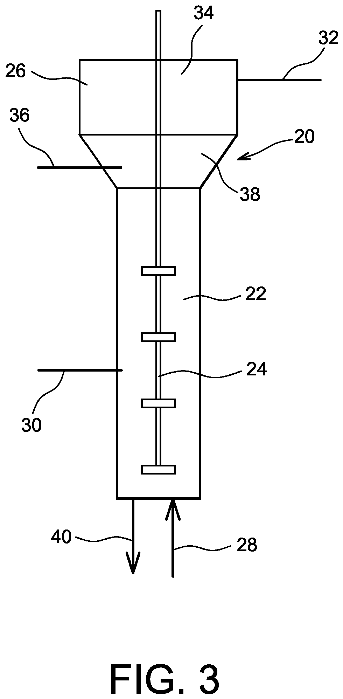

Dans cet exemple, le dispositif est différent de celui utilisé dans les exemples 4 et 5 mais correspond toujours au schéma de principe de la figure 3. La première zone 22 mesure 0,15 m de diamètre et 0,18 m de hauteur représentant un volume utile de 2,9 L. Le mobile d'agitation est constitué de 2 étages de pales. Les pales situées à l'extrémité inférieure du mobile mesurent 0,06 m de largeur et 0,04 m de hauteur, tandis que celles de l'étage du dessus mesure 0,06 m de largeur et 0,015 m de hauteur. La première zone 22 est également équipée de 4 chicanes métalliques de 0,01 m de largeur sur toute la hauteur de la première zone 22 permettant de favoriser le mélange de l'effluent avec les réactifs. La vitesse de rotation du mobile est de 75 t/min. La seconde zone 26 mesure 0,45 m de diamètre et 0,16 m de hauteur correspondant ainsi à un volume utile de 15,7 L.

Dans ce dispositif, un effluent est introduit à environ 0,05 m de la partie inférieure du dispositif contenant du nitrate de strontium Sr(NO₃)₂ à une concentration de 24*10⁻³ g/L, du nitrate de néodyme Nd(NO₃)₃.6H₂O à une concentration de 61*10⁻³ g/L et du nitrate de césium à une concentration de 30*10⁻³ g/L. Cet effluent contient également 42,5 g/L de nitrate de sodium NaNO₃ et 5,35 g/L, de sulfate de sodium Na₂SO₄. Les éléments à éliminer sont le strontium, le césium et le néodyme.

L'effluent est injecté à un débit constant de 15 L/h par la conduite 28. Dans le cadre de cet exemple, la conduite 30 correspond, en réalité dans cet exemple, à 4 conduites acheminant à 0,05 m du fond du dispositif les 4 solutions ou suspensions suivantes:
* une solution comprenant 92,5 g/L de nitrate de baryum Ba(NO₃)₂ à un débit constant de 0,84 L/h;
* une solution comprenant 178,6 g/L de sulfate de fer FeSO₄.7H₂O et 35,7 g/L de sulfate de cuivre CuSO₄.5H₂O à un débit constant de 0,57 L/h;
* une solution comprenant 720 g/L d'hydroxyde de sodium NaOH à un débit constant de 0,06 L/h;
* une suspension formée par mélange de 43 g/L de ferrocyanure de potassium Fe(CN)₆K₄.3H₂O et de 28,6 g/L de sulfate de nickel NiSO₄.6H₂O introduite à un débit constant de 0,57 L/h.

L'expérience commence par le remplissage du dispositif avec l'effluent par la conduite 28 et par les 4 contributions de la conduite 30. Après 4 heures de fonctionnement, les concentrations résiduelles en strontium, césium et néodyme dans la conduite 32 après filtration à 0,22 µm sont les suivantes:
- strontium: 25*10⁻⁶ g/L;
- césium: inférieure à 20*10⁻⁶ g/L ;
- néodyme: inférieure à 20*10⁻⁶ g/L.

A titre de comparaison, avec le mode de traitement classique en mode continu tous débits égaux (conformément à l'exemple 2), les concentrations résiduelles en strontium, césium et néodyme sont les suivantes:
- strontium: 280*10⁻⁶ g/L;
- césium: inférieure à 40*10⁻⁶ g/L;
- néodyme: 130*10⁻⁶ g/L.

La comparaison du procédé continu classique et du procédé en lit fluidisé montre que, pour une même quantité de boue produite, la décontamination est améliorée d'un facteur 11 sur le strontium et d'un facteur au minimum de 6,5 sur le néodyme.

## Revendications

1. Procédé continu de décontamination d'un effluent liquide comprenant un ou plusieurs éléments chimiques radioactifs à éliminer comprenant les étapes suivantes :
- une étape de mise en contact en lit fluidisé agité, dans une première zone d'un réacteur, dudit effluent liquide avec des particules solides aptes, par coprécipitation et/ou adsorption et/ou échange d'ions, à capter et retenir le ou lesdits éléments chimiques radioactifs, moyennant quoi l'on obtient une suspension de particules solides contenant le ou lesdits éléments chimiques radioactifs, cette étape de mise en contact en lit fluidisé consistant à mettre en suspension des particules solides constituées par lesdites particules solides aptes, par coprécipitation et/ou adsorption et/ou échange d'ions, à capter et retenir le ou lesdits éléments chimiques radioactifs, dans un écoulement fluide ascendant constitué par ledit effluent liquide ;
- une étape de décantation de ladite suspension, dans une seconde zone du même réacteur, cette seconde zone étant distincte de la première zone susmentionnée, moyennant quoi l'on obtient une phase solide comprenant les particules solides contenant ledit ou lesdits éléments chimiques radioactifs à éliminer et une phase liquide appauvrie ou dénuée en ledit ou lesdits éléments chimiques radioactifs à éliminer ; et
- une étape de séparation de ladite phase solide et de ladite phase liquide ;
ledit réacteur étant un réacteur vertical, dans lequel la première zone est une première colonne où l'effluent liquide ainsi que les particules ou les réactifs nécessaires à la formation desdites articules sont injectées et la seconde zone est une seconde colonne surmontant ladite première colonne

2. Procédé de décontamination selon la revendication 1, dans lequel les éléments chimiques radioactifs sont choisis parmi le strontium, le ruthénium, le césium, des émetteurs α, tels que l'américium, le plutonium et l'uranium, et les mélanges de ceux-ci.

3. Procédé de décontamination selon la revendication 2, dans lequel, lorsque l'élément chimique à éliminer est le strontium, les particules solides sont des particules solides de sulfate de baryum, de carbonate de baryum, de carbonate de calcium, d'hydroxyde de fer, de phosphate de calcium, de phosphate de fer, de dioxyde de manganèse et/ou de dioxyde de titane.

4. Procédé de décontamination selon la revendication 2, dans lequel, lorsque l'élément chimique à éliminer est le ruthénium ou un émetteur α, tel que l'américium, le plutonium et l'uranium, les particules solides sont des particules solides d'hydroxyde de fer et de cuivre.

5. Procédé de décontamination selon la revendication 2, dans lequel, lorsque l'élément chimique à éliminer est le césium, les particules solides sont des particules solides de ferrocyanure de nickel et de cobalt, de tétraphénylborate et/ou des particules présentant une structure zéolithique.

6. Procédé selon l'une quelconque des revendications précédentes, dans lequel le lit fluidisé est agité par le biais d'un mobile d'agitation présent dans ladite première zone.

7. Procédé selon l'une quelconque des revendications précédentes, dans lequel les particules solides sont réalisées *in situ* dans ladite première zone par réaction entre des réactifs appropriées ou sont injectées préformées dans la première zone.

8. Procédé selon l'une quelconque des revendications précédentes, comprenant, avant la mise en oeuvre de l'étape de mise en contact, une étape de remplissage de ladite première zone d'une quantité prédéterminée de particules solides aptes à capter et retenir le ou lesdits éléments chimiques à éliminer et/ou de réactifs aptes à réagir pour former lesdites particules.

## Patentansprüche

1. Kontinuierliches Verfahren zur Dekontamination eines Abwassers enthaltend ein oder mehrere zu entfernende radioaktive chemische Elemente umfassend die folgenden Schritte:
- einen Schritt des Inkontaktbringens des genannten Abwassers mit festen Partikeln, welche durch Copräzipitation und/oder Adsorption und/oder lonenaustausch fähig sind, die genannten radioaktiven chemischen Elemente einzufangen und zurückzuhalten, in einer gerührten Wirbelschicht in einer ersten Zone eines Reaktors, wodurch man eine Suspension von festen Partikel umfassend das oder die radioaktiven chemischen Elemente erhält, wobei dieser Schritt des Inkontaktbringens in einer Wirbelschicht besteht aus dem Suspendieren von festen Partikeln, welche aus den genannten festen Partikeln bestehen, welche geeignet sind durch Copräzipitation und/oder Adsorption und/oder lonenaustausch das oder die genannten radioaktiven chemischen Elemente zu fangen und zurückzuhalten, in einer aufsteigenden Fluidströmung, welche durch das genannte Abwasser dargestellt wird;
- einen Schritt des Dekantierens der genannten Suspension in einem zweiten Zone desselben Reaktors, wobei die zweite Zone von der oben genannten ersten Zone verschieden ist, wodurch man eine feste Phase erhält, die die festen Partikel umfasst, welche das oder die genannten zu entfernenden radioaktiven chemischen Elemente enthalten, und eine flüssige Phase, die verarmt oder befreit von dem oder den zu entfernenden radioaktiven chemischen Elementen ist, und
- einen Schritt der Trennung der genannten festen Phase und der genannten flüssigen Phase;
wobei der genannten Reaktor ein vertikaler Reaktor ist, dessen erste Zone eine erste Kolonne ist, in die das Abwasser sowie die Teilchen oder die für die Bildung der genannten Teilchen notwendigen Reaktanten eingespeist werden, und die zweite Zone eine zweite Kolonne ist, welche auf die genannte erste Kolonne aufmontiert ist.

2. Verfahren zur Dekontamination gemäß Anspruch 1, worin die radioaktiven chemischen Elemente ausgewählt sind aus Strontium, Ruthenium, Caesium, Alphastrahlern wie Americium, Plutonium und Uran, oder Mischungen derselben.

3. Verfahren zur Dekontamination gemäß Anspruch 2, worin, wenn das zu entfernende chemische Element Strontium ist, die festen Partikel feste Partikel aus Bariumsulfat, Bariumcarbonat, Calciumcarbonat, Eisenhydroxid, Calciumphosphat, Eisenphosphat, Mangandioxid und/oder Titandioxid sind.

4. Verfahren zur Dekontamination gemäß Anspruch 2, worin, wenn das zu entfernende chemische Element Ruthenium oder ein Alphastrahler, wie Americium, Plutonium oder Uran ist, die festen Partikel feste Partikel aus Eisenhydroxid oder Kupferhydroxid sind.

5. Verfahren zur Dekontamination gemäß Anspruch 2, worin, wenn das zu entfernende chemische Element Caesium ist, die festen Partikel feste Partikel aus Nickel- oder Kobalt-Ferrocyanid, Tetraphenylborat und/oder Partikel, welche ein zeolithische Struktur aufweisen, sind.

6. Verfahren gemäß einem der vorhergehenden Ansprüche, worin die Wirbelschicht über ein Rührwerk, welches in der genannten ersten Zone vorhanden ist, gerührt wird.

7. Verfahren gemäß einem der vorhergehenden Ansprüche, worin die festen Partikel *in situ* in der genannten ersten Zone durch Reaktion zwischen geeigneten Reaktanten hergestellt oder vorgebildet in die erste Zone eingeführt werden.

8. Verfahren gemäß einem der vorhergehenden Ansprüche, umfassend, vor dem Schritt des Inkontaktbringens, einen Schritt der Befüllung der genannten ersten Zone mit einer vorbestimmten Menge der festen Partikel, die geeignet sind, das oder die zu eliminierenden chemischen Elemente zu fangen und zurückzuhalten, und/oder mit Reaktanten, die unter Bildung der genannten Partikel reagieren können.

## Claims

1. A continuous method for decontamination of a liquid effluent including one or more radioactive chemical elements to be eliminated, including the following steps:
- a step of bringing into contact in a stirred fluidised bed, in a first zone of a reactor, of the said liquid effluent with solid particles able, by coprecipitation and/or adsorption and/or ion exchange, to capture and retain the said radioactive chemical element or elements, as a result of which a suspension of solid particles is obtained containing the said radioactive chemical element or elements, this step of bringing into contact in a fluidised bed consisting in putting into suspension solid particles consisting in said solid particles able, by coprecipitation and/or adsorption and/or ion exchange, to capture and retain the said radioactive(s) element(s), in a fluid upflow consisting of the liquid effluent;
- a step of settling of the said suspension, in a second zone of the same reactor, where this second zone is separate from the first abovementioned zone, as a result of which a solid phase is obtained including the solid particles containing the said radioactive chemical element or elements to be eliminated, and a liquid phase with a reduced or zero content of the said radioactive chemical element or elements to be eliminated; and
- a step of separation of the said solid phase and of the said liquid phase ;
said reactor being a vertical reactor, wherein the first zone is a first column into which the liquid effluent together with the particles or the reagents required for the formation of the said particles are injected and the second zone is a second column positioned above the said first column.

2. A method for decontamination according to claim 1, in which the radioactive chemical elements are chosen from among strontium, ruthenium, caesium, α emitters, such as americium, plutonium and uranium, and blends of these.

3. A method for decontamination according to claim 2, in which, when the chemical element to be eliminated is strontium, the solid particles are solid particles of barium sulphate, barium carbonate, calcium carbonate, iron hydroxide, calcium phosphate, iron phosphate, manganese dioxide and/or titanium dioxide.

4. A method for decontamination according to claim 2, in which, when the chemical element is ruthenium or an α emitter, such as americium, plutonium or uranium, the solid particles are solid particles of iron or copper hydroxide.

5. A method for decontamination according to claim 2, in which, when the chemical element to be eliminated is caesium, the solid particles are solid particles of nickel and cobalt ferrocyanide, tetraphenylborate and/or particles with a zeolitic structure.

6. A method according to any of the previous claims, in which the fluidised bed is stirred by means of a stirrer blade present in the said first zone.

7. A method according to any of the previous claims, in which the solid particles are produced *in situ* in the said first zone by reaction between appropriate reagents, or are injected preformed into the first zone.

8. A method according to any of the previous claims including, before implementation of the contact step, a step for filling of the said first zone with a predetermined quantity of solid particles able to capture and retain the said chemical element or elements to be eliminated and/or of reagents able to react to form the said particles.
